Europäisches Patentamt

(19) European Patent Office

Office européen des brevets

(11) EP 1 350 858 B1

(12) EUROPEAN PATENT SPECIFICATION

(45) Date of publication and mention of the grant of the patent:
07.06.2006 Bulletin 2006/23

(51) Int Cl.:
*C22C 38/00* (2006.01)

(21) Application number: 01974789.8

(22) Date of filing: 11.10.2001

(86) International application number:
PCT/JP2001/008933

(87) International publication number:
WO 2002/031213 (18.04.2002 Gazette 2002/16)

(54) **CR CONTAINING STEEL FOR WELDED STRUCTURE**

CHROMHALTIGER STAHL FÜR GESCHWEISSTE BAUTEILE

ACIER AU CR POUR STRUCTURE SOUDEE

(84) Designated Contracting States:
DE FR

(30) Priority: 12.10.2000 JP 2000311398

(43) Date of publication of application:
08.10.2003 Bulletin 2003/41

(73) Proprietor: JFE Steel Corporation
Tokyo (JP)

(72) Inventors:
• MIYAZAKI, Atsushi
  c/o Technical Research Lab.
  Chiba-shi,
  Chiba 260-0835 (JP)
• HIRASAWA, Junichiro
  c/o Technical Research Lab.
  Chiba-shi,
  Chiba 260-0835 (JP)
• SATOH, Susumu
  c/o Technical Research Lab.
  Chiba-shi,
  Chiba 260-0835 (JP)
• HASUNO, Sadao
  c/o KAWASAKI STEEL CORPORATION
  Chiyoda-ku,
  Tokyo 100-0011 (JP)
• KOBAYASHI, Makoto
  c/o Chiba Works
  Chuo-ku
  Chiba-shi
  Chiba 260-0835 (JP)
• TOYOOKA, Takaaki
  c/o Technical Research Lab.
  Handa-shi,
  Aichi 475-8611 (JP)
• KITAZAWA, Makoto
  c/o Technical Research Lab.
  Handa-shi,
  Aichi 475-8611 (JP)

(74) Representative: Henkel, Feiler & Hänzel
Patentanwälte
Maximiliansplatz 21
80333 München (DE)

(56) References cited:
EP-A- 0 492 576          EP-A- 0 496 350
EP-A- 0 738 784          EP-A- 0 774 519
EP-A- 0 774 520          EP-A- 0 964 073
JP-A- 8 199 310          JP-A- 58 052 460
JP-A- 59 215 468         US-A- 3 336 168
US-A- 4 256 486          US-A- 5 116 571

• PATENT ABSTRACTS OF JAPAN vol. 1996, no. 10, 31 October 1996 (1996-10-31) -& JP 08 144012 A (NIPPON STEEL CORP), 4 June 1996 (1996-06-04)
• PATENT ABSTRACTS OF JAPAN vol. 1999, no. 08, 30 June 1999 (1999-06-30) -& JP 11 061347 A (KAWASAKI STEEL CORP), 5 March 1999 (1999-03-05)
• PATENT ABSTRACTS OF JAPAN vol. 2000, no. 06, 22 September 2000 (2000-09-22) -& JP 2000 080416 A (KAWASAKI STEEL CORP), 21 March 2000 (2000-03-21)
• PATENT ABSTRACTS OF JAPAN vol. 010, no. 310 (C-379), 22 October 1986 (1986-10-22) -& JP 61 119654 A (KAWASAKI STEEL CORP), 6 June 1986 (1986-06-06)

• PATENT ABSTRACTS OF JAPAN vol. 017, no. 263 (M-1415), 24 May 1993 (1993-05-24) -& JP 05 001535 A (NISSHIN STEEL CO LTD; others: 01), 8 January 1993 (1993-01-08)

**Description**

Technical Field

The present invention relates to Cr-containing steel used for a welded structure, in particular, suitably used as members arranged around the tire attachment area in an automobile.

Background Art

Hitherto, coated steel obtained by welding, machining and then coating plain steel has been primarily employed as members arranged around the tire attachment area in an automobile.

The members arranged around the tire attachment area in an automobile are required to have high strength for ensuring sufficient rigidity. Also, because those members are used as welded structure parts that are welded to a vehicle body, etc., they are required to have sufficient toughness and high strength in welding area, such as a bead and a welding-heat affected zone (abbreviated to "HAZ" hereinafter). Further, the members arranged around the tire attachment area in an automobile are located in positions where they are directly exposed to, e.g., splash water from the road surface, and hence are required to have superior corrosion resistance as well.

A welded bead has no problems because satisfactory levels of strength, toughness and corrosion resistance can be ensured by selecting a proper welding wire. However, characteristics of HAZ, such as strength, toughness and corrosion resistance, are easily affected by characteristics of a basic material itself. It is hence important to improve the characteristics of HAZ.

Conventionally, plain steel is employed as a basic material for a member arranged around the tire attachment area in an automobile, and the plain steel must be subjected to a coating step after welding and machining steps. The necessity of the coating step has noticeably deteriorated manufacturability and productivity.

In view of the above situation, attention has been focused on Cr-containing steel as a basic material for a member arranged around the tire attachment area in an automobile, and a variety of studies have been conducted.

In a member arranged around the tire attachment area in an automobile, stresses are apt to concentrate on a weld toe of a bead formed by MIG (Metal Inert Gas) or MAG (Metal Active Gas) welding, and the weld toe tends to become a start point of fatigue failure. For that reason, it is important to ensure mechanical characteristics, particularly strength and toughness, of an area around the weld toe, i.e., of HAZ. One example of Cr-containing steel having improved strength and toughness of a welding area is a structure-oriented martensitic stainless steel having superior weldability and workability, which is disclosed in Japanese Unexamined Patent Publication No. 55-21566. Such stainless steel has been initially studied as being employed as members arranged around the tire attachment area in an automobile.

The above-mentioned martensitic stainless steel is able to noticeably improve the toughness of HAZ by preparing a component system containing low C-low N martensite and low Ni, but cannot provide sufficient corrosion resistance of HAZ. Therefore, in spite of a parent material having superior corrosion resistance, HAZ must be coated as conventional. Eventually, a merit resulting from employing stainless steel is lessened.

As means for improving corrosion resistance of HAZ in stainless steel, it has hitherto been known with regard to ferritic stainless steel that adding Ti is effective. However, addition of Ti causes a problem in reducing the martensite phase in HAZ or lowering the strength of the martensite phase itself, thus resulting in a reduction of strength and toughness of HAZ. Note that since the strength of HAZ cannot be directly measured, it is usually determined by measuring the Vickers hardness of HAZ in accordance with the method stipulated by SAE J417, and then converting a measured result into strength.

In the state of the art, as described above, there exists no Cr-containing steel that has satisfactory levels in all of (1) toughness of HAZ, (2) strength (hardness) of HAZ, and (3) corrosion resistance of HAZ, and that is suitably used as members arranged around the tire attachment area in an automobile. EP-A- 738 784 discloses a martensitic weldable steel used for steel pipes and having excellent corrosion resistance, weld cracking resistance and toughness in the HAZ. An example of the known steel has a composition which departs from that of the invention only in a missing content of boron.

Accordingly, it is an object of the present invention to provide Cr-containing steel that has satisfactory levels in all of toughness, strength (hardness) and corrosion resistance of HAZ, and that is suitably used as parts arranged around the tire attachment area in an automobile. In particular, stength and hardness and cracks due to embrittlement in the HAZ are to be improved.

Disclosure of the Invention

The object is achieved by a steel having the composition of claim 1. The provided content of boron increases strength and hardness and suppresses cracks in the HAZ.

To achieve the above object, the inventors conducted close studies on effects of various elements added in steel. As a result, the inventors found that corrosion resistance of HAZ could be noticeably improved by adding V in proper amount.

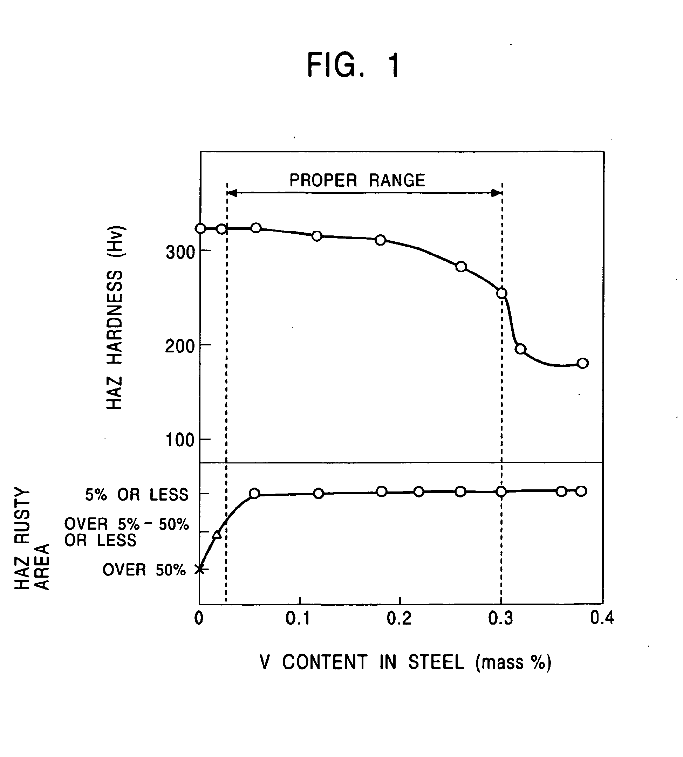

Various kinds of Cr-containing steel having different V contents on the basis of Fe-12 mass% Cr-2 mass% Mn-0.5 mass% Ni, for example, were produced by way of experiment. Each sample of the produced steel was subjected to MIG welding, and then HAZ strength (actually hardness) of each sample was measured. Also, corrosion resistance of each sample after the welding was evaluated. Obtained results are plotted in Fig. 1. The welding conditions of each sample, the method for measuring HAZ hardness, and the method for evaluating HAZ corrosion resistance were set similarly to those in Examples described later.

As seen from the results of Fig. 1, by adding V in steel in predetermined amount or more, the corrosion resistance of HAZ is noticeably improved, but the hardness is noticeably reduced when the V content exceeds 0.30 mass%.

From the above-mentioned finding, it was confirmed that, by adding V in steel in proper amount, both the hardness, i.e., the strength, and the corrosion resistance of HAZ could be obtained at high levels.

Further, it was confirmed that satisfactory toughness and strength of HAZ could be obtained by setting an F or F' value to be not larger than a predetermined value, the F or F' value being calculated by putting values of contents of respective components contained in steel in a formula (1) or (2) described later.

The present invention has been made on the basis of the above-mentioned findings, and the gist of the invention is as follows.

The present invention provides Cr-containing steel used for a welded structure, the steel containing, by mass%, C: not more than 0.020%, Si: not more than 1.00%, Mn: 1.0 to 5.0%, P: not more than 0.050%, S: not more than 0.020%, Cr: 6.0 to 15.0%, Ni : 0.10 to 1.00 % , Al: not more than 0.100%, N: not more than 0.020%, and V: 0.03 to 0.30%, B : 0.0003 to 0.0050%, the balance consisting of Fe and unavoidable impurities, wherein an F value calculated by putting values of contents (mass%) of the respective components in the following formula (1) is not larger than 13.50:

$$\text{F value} = \text{Cr} + 0.4 \times \text{Si} + 0.2 \times \text{Al} + 5 \times \text{P} - 0.4 \times \text{Mn}$$
$$- 0.7 \times \text{Ni} - 35 \times \text{C} - 10 \times \text{N} + 10 \times \text{V} \quad \ldots(1)$$

In addition, the present invention provides Cr-containing steel used for a welded structure, wherein the steel further contains at least one of Cu: 0.10 to 2.0 % and Mo: 0.40 to 3.0%, and an F' value calculated by putting values of contents (mass%) of the respective components in the following formula (2) is not larger than 13.50:

$$\text{F' value} = \text{Cr} + 0.6 \times \text{Mo} + 0.4 \times \text{Si} + 0.2 \times \text{Al} + 5 \times \text{P}$$
$$- 0.4 \times \text{Mn} - 0.7 \times \text{Ni} - 0.6 \times \text{Cu} - 35 \times \text{C}$$
$$- 10 \times \text{N} + 10 \times \text{V} \quad \ldots(2)$$

Brief Description of the Drawings

Fig. 1 is a graph plotting hardness and corrosion resistance of HAZ versus V content (mass%) in Cr-containing steel that contains Fe-12 mass% Cr-2 mass% Mn-0.5 mass% Ni as basic components.
Fig. 2 is an illustration showing positions at which HAZ hardness was measured.
Fig. 3 is an illustration showing a position at which a Charpy impact test piece was sampled.
Fig. 4 is an illustration showing a test piece sampled for a salt-spray test.

Best Mode for Carrying Out the Invention

The reasons why the contents of components of Cr-containing steel according to the present invention (referred to simply as "inventive steel" hereinafter) are limited to the above-mentioned ranges will be described below in detail.

· C: not more than 0.020 mass% and N: not more than 0.020 mass%

In the inventive steel; C and N are components adversely affecting corrosion resistance of HAZ. If any of the contents of C and N in the steel exceeds 0.020 mass%, the corrosion resistance is noticeably deteriorated. Therefore, the contents of C and N are both set to be not more than 0.020 mass%.

Additionally, for increasing strength (hardness) of HAZ, C and N are both preferably not less than 0.005 mass%.

· Si: 0.05 mass% to 1.00 mass%

Si has a deoxidizing action and is a component essential from the viewpoint of steel-making. Therefore, Si of not less than 0.05 mass% is usually contained in molten steel after the steel-making process. If the Si content exceeds 1.00 mass% in the component system of the present invention, the martensite phase produced in HAZ would be noticeably reduced. Accordingly, the Si content is limited to be not more than 1.00 mass%.

· Mn: 1.0 to 5.0 mass%

Mn is a component essential for stabilizing the γ (austenite) phase at high temperature and achieving satisfactory hardenability. Therefore, a lower limit of the Mn content is set to 1.0 mass%. On the other hand, if the Mn content exceeds 5.0 mass%, toughness of HAZ would be deteriorated. Accordingly, an upper limit of the Mn content is set to 5.0 mass%.

· P: not more than 0.050 mass%

The P content is preferably as low as possible from the viewpoint of workability. However, from the viewpoint of economic restriction imposed on the dephosphorizing process in steel-making, an upper limit of the P content is set to 0.050 mass%.

· S: not more than 0.020 mass%

The S content is preferably as low as possible from the viewpoint of corrosion resistance. However, from the viewpoint of economic restriction imposed on the desulfurizing process in steel-making, an upper limit of the S content is set to 0.020 mass%.

· Cr: 6.0 to 15.0 mass%

Cr is a component effective in improving corrosion resistance. When the Cr content is set to be not less than 6.0 mass%, the corrosion resistance is noticeably improved, and hence a lower limit of the Cr content is set to 6.0 mass%. On the other hand, if the Cr content exceeds 15.0 mass%, a larger amount of Ni would be required to produce the martensite phase in HAZ and the cost would be increased. Therefore, an upper limit of the Cr content is set to 15.0 mass%. Preferably, the Cr content is set to the range of 10.0 to 15.0 mass%.

· Ni: 0.10 to 1.00 mass%

Ni is a component for stabilizing the γ phase at high temperature. To develop the stabilizing effect, Ni requires to be added in amount not less than 0.10 mass%. However, Ni is expensive and positive addition of Ni increases the cost. Accordingly, an upper limit of the Ni content is set to 1.00 mass%.

· Al: not more than 0.100 mass%

Al is an essential component serving as a deoxidizer from the viewpoint of steel-making. Therefore, Al of not less than 0.02 mass% is usually contained in molten steel after the steel-making process. However, when Al is not used as a deoxidizer, it is usual that Al of not less than 0.002 mass% is unavoidably contained. If Al is overly added in excess of 0.100 mass%, inclusions are more apt to generate and toughness tends to deteriorate. Accordingly, an upper limit of the Al content is set to 0.100 mass%.

· V: 0.03 to 0.30 mass%

V is a component effective in improving corrosion resistance of HAZ when added in steel in proper amount. The effect is developed at the V content of not less than 0.03 mass%, but if V is overly added in excess of 0.30 mass%, strength and toughness of HAZ would be deteriorated. Therefore, the V content is set to the range of 0.03 to 0.30 mass%. For satisfying both the corrosion resistance and strength (hardness) of HAZ at high levels, the V content is preferably set to the range of 0.06 to 0.15 mass%.

In the present invention, for ensuring satisfactory toughness and strength (hardness) of HAZ, it is an essential feature in addition to the above-described limitations of steel composition that an F value calculated by putting values of contents (mass%) of the respective components in the following formula (1) is not larger than 13.50:

$$F\ value\ =\ Cr\ +\ 0.4\ \times\ Si\ +\ 0.2\ \times\ Al\ +\ 5\ \times\ P\ -\ 0.4\ \times\ Mn$$

$$-\ 0.7\ \times\ Ni\ -\ 35\ \times\ C\ -\ 10\ \times\ N\ +\ 10\ \times\ V \qquad ...(1)$$

In the above formula (1), Cr, Si, Al, P and V are the so-called ferrite generating elements and impede generation of the γ phase at high temperature. On the other hand, Mn, Ni, C and N are the so-called austenite generating elements and promote generation of the γ phase at high temperature. It was found that an increase of the F value made it harder to generate the γ phase at high temperature and to obtain toughness and strength of HAZ at sufficient levels. As a result of conducting closer studies, it was also found that, by setting the F value to be not larger than 13.50, fine and soft martensite phase was precipitated in HAZ and sufficient levels of toughness and strength were ensured in a welding area.

For those reasons, the F value is limited to be not larger than 13.50 in the component system of the present invention.

Thus, by employing the features set forth above, the present invention has succeeded in developing Cr-containing steel that has satisfactory levels in all of toughness, strength (hardness) and corrosion resistance of HAZ, and that is suitably used as, in particular, parts arranged around the tire attachment area in an automobile.

Also, in the present invention, at least one of Cu and Mo may be added in the steel as other suitable components if necessary.

· Cu: 0.10 to 2.00 mass%

Cu is a component effective in not only improving corrosion resistance, but also stabilizing the γ phase at high temperature. To develop those effects, Cu is required to be added in amount not less than 0.10 mass%. However, if Cu is overly added in excess of 2.00 mass%, hot workability of the steel would be deteriorated. Therefore, an upper limit of the Cu content is set to 2.00 mass%. Preferably, the Cu content is set to be not more than 1.00 mass%.

· Mo: 0.40 to 3.00 mass%

Mo is a component effective in improving corrosion resistance. To develop that effect, Mo is required to be added in amount not less than 0.40 mass%. However, if Mo is overly added in excess of 3.00 mass%, the basic material would be embrittled because Mo is the ferrite generating element. Therefore, an upper limit of the Mo content is set to 3.00 mass%.

In the component system containing at least one of Cu and Mo in the steel, it is an essential feature that, instead of the F value, an F' value calculated by putting values of contents (mass%) of the respective components in the following formula (2), in which the contents of at least one of Cu and Mo components are taken into account, is not larger than 13.50:

$$F'\ value\ =\ Cr\ +\ 0.6\ \times\ Mo\ +\ 0.4\ \times\ Si\ +\ 0.2\ \times\ Al\ +\ 5\ \times\ P$$

$$-\ 0.4\ \times\ Mn\ -\ 0.7\ \times\ Ni\ -\ 0.6\ \times\ Cu\ -\ 35\ \times\ C$$

$$-\ 10\ \times\ N\ +\ 10\ \times\ V \qquad ...(2)$$

B is a necessary addition in the Cr-containing steel described above.

· B: 0.0003 to 0.0050 mass%

B is a component effective in improving hardenability, increasing hardness of HAZ, as well as suppressing cracks due to embrittlement. Those effects are developed at the B content of not less than 0.0003 mass%, but if the B content exceeds 0.0050 mass%, toughness would be deteriorated. Therefore, the B content is set to the range of 0.0003 to 0.0050 mass%. The B content is preferably set to the range of 0.0005 to 0.0015%.

A method for manufacturing the Cr-containing steel according to the present invention is not limited to a particular one. For example, the method that is generally employed in manufacturing Cr-containing steel, such as stainless steel, may be applied substantially as it is. One example of the manufacturing method will be described below.

A basic steel material obtained through continuous casting is first heated up to a predetermined temperature as required. The basic steel material is then subjected to hot rolling, whereby a hot-rolled plate having a desired plate thickness is obtained. Subsequently, the hot-rolled plate is subjected to box annealing at 600 to 900°C depending on a required strength level, and it is brought into practical use as it is or after pickling. Otherwise, the annealed plate is subjected to cold rolling, whereby a cold-rolled plate having a predetermined thickness is obtained. Then, the cold-rolled plate is subjected to continuous annealing at preferably 700 to 900°C and pickling. As a result, Cr-containing steel is manufactured in the form of a cold-rolled and annealed plate.

Note that the above-described manufacturing process merely represents one example of embodiments of the present invention, various processes can be added depending on applications.

(Examples)

The present invention will be described below in more detail in connection with Examples of the invention and Comparative Examples.

A hot-rolled plate having a thickness of 4 mm was produced by smelting 50 kg of a steel ingot having the chemical composition, shown in Table 1, in a vacuum smelting furnace, and hot-rolling the ingot under ordinary hot-rolling conditions. Then, the hot-rolled plate was annealed at 700°C x 8 hours and subjected to MIG welding under conditions given below. Subsequently, the welded plate was evaluated for not only Vickers hardness as evaluation of HAZ hardness, but also toughness and corrosion resistance of HAZ.

(Welding Conditions)

Butt Welding

Welding Wire: wire diameter 1.2 mm$\phi$, material: SUS309S (JIS G4309)

Shield Gas: 95 vol.% Ar - 5% vol.% Oxygen

Welding Current: 170 A, Welding Voltage: 24 V,

Welding Rate: 400 mm/min

(1) Method for measuring HAZ hardness

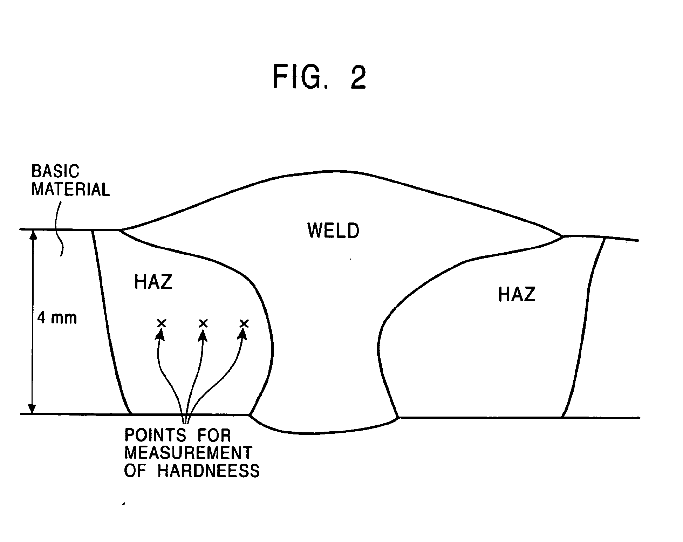

Hardness of HAZ was measured in accordance with the Vickers hardness testing method stipulated by JIS (Japanese Industrial Standard) Z 2244-1992. A test load was set to 9.8 N (1 kgf), and the HAZ hardness was measured at three positions (spaced from each other at a pitch of 0.8 mm) shown in Fig. 2. The HAZ hardness was evaluated based on an average of the measured hardness values. The measured results are listed in Table 1.

(2) Method for evaluating HAZ toughness

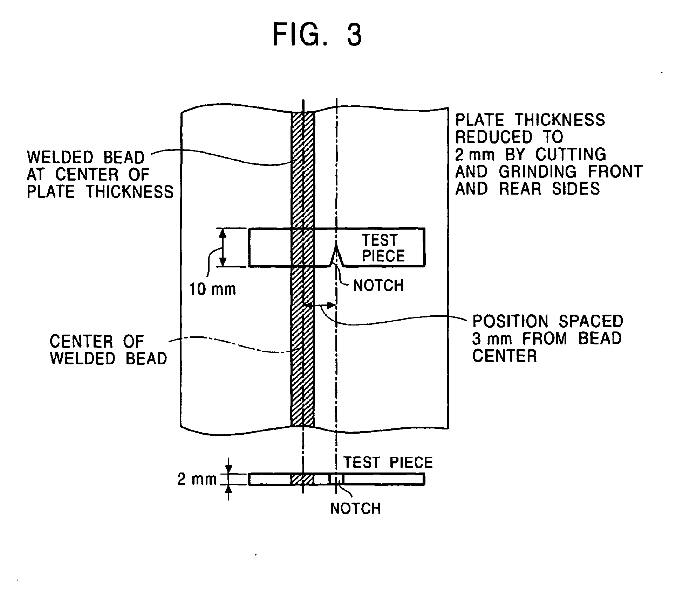

Toughness of HAZ was evaluated as follows. Three No. 4 test pieces stipulated by JIS Z 2202-1980 were each sampled from a position shown in Fig. 3 (each of the test pieces being a sub-size test piece finished to have a thickness of 2 mm by cutting and grinding the front and rear sides of the test piece, and having a 2-mm V-notch formed in a HAZ position to extend parallel to the welding direction). Each test piece was set on a Charpy impact tester and then tested in accordance with the Charpy impact testing method stipulated by JIS Z 2242-1993. Energy absorbed in the test for breaking the test piece was calculated, and the HAZ toughness was evaluated based on an average of absorbed energy values obtained from three test pieces. Incidentally, the test temperature was set to 0°C. The absorbed energy value calculated for each type of test piece was listed in Table 1.

(3) Method for evaluating HAZ corrosion resistance

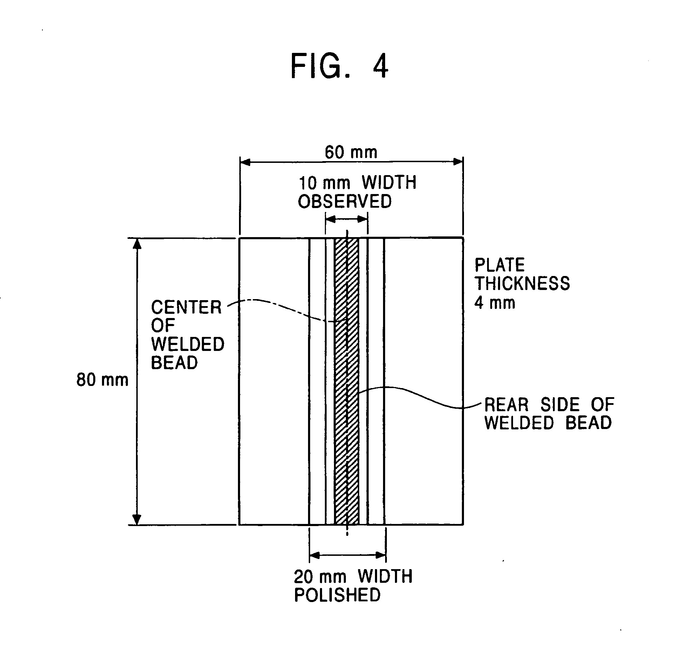

Corrosion resistance of HAZ was evaluated as follows. After welding, two samples having a size of 60 mm x 80 mm were each cut out from a position shown in Fig. 4. After polishing an area of a 20-mm width on the rear side of each test piece, including a weld, with a #400 sandpaper, a salt-spray test (SST) was performed on the test piece for 4 hours in accordance with JIS Z 2371. The corrosion resistance of HAZ was evaluated by regarding an area of a 10-mm width including a welded bead at the center as HAZ (10 mm x 80 mm), and then measuring the size of a rusty area in HAZ. The evaluated results are listed in Table 1. In table 1, a mark "O" represents the case in which the rusty area given as an average obtained from the two samples is 5% (rusty area of 40 $mm^2$/HAZ area of 800 $mm^2$) or less. A mark "Δ" represents the case in which the rusty area given as an average obtained from the two samples is in the range of 5% to 50% (rusty area of 40 $mm^2$ to 400 $mm^2$). A mark "×" represents the case in which the rusty area given as an average obtained from the two samples was over 50% (rusty area of 400 $mm^2$ or over).

As seen from the results of Table 1, in inventive steels 1 to 3 and 10 in which a proper amount of V is added, the corrosion resistance of HAZ is noticeably superior to that of comparative steels A and B in which the V content in the steel deviates from the proper range in the present invention. Also, it is seen that, in inventive steels 4 and 5, since B is further added in the steel within a preferred range of content, hardenability is improved and hence the hardness of HAZ is increased correspondingly. In inventive steels 6 to 9 and 11, since at least one of Mo and Cu is further added in the steel within a preferred range of content, the effects of reducing a pit depth and improving the corrosion resistance in comparison with the case of adding neither Mo nor Cu are obtained. Hence, satisfactory levels are achieved in all of toughness, hardness and corrosion resistance of HAZ.

On the other hand, in a comparative steel C, since V is added in the steel over the proper range in the present invention, both the hardness and toughness of HAZ are deteriorated. In a comparative steel D, since Mn is added in the steel over the proper range in the present invention, the toughness of HAZ is deteriorated. In a comparative steel E, since the F value exceeds the proper range in the present invention, the toughness of HAZ is deteriorated.

Industrial Applicability

Since the Cr-containing steel according to the present invention is superior in all of toughness, strength (hardness) and corrosion resistance of HAZ, it can be used for a welded structure, particularly it is suitably used as members arranged around the tire attachment area in an automobile.

Note that the Cr-containing steel according to the present invention can be used in any desired form such as a pipe and plate. While Examples of the present invention were described in connection with the case of employing a hot-rolled plate, similar advantages are also obtained in the case of employing a cold-rolled plate. Further, the Cr-containing steel according to the present invention may be used after coating, as required, for the purpose of further improving the corrosion resistance of HAZ, and such a case also falls within the scope of the present invention.

Table 1

| STEEL No. | CHEMICAL COMPOSITION (mass%) | | | | | | | | | | | | | F OR F' VALUE | T | U | W | REMARKS |
|---|---|---|---|---|---|---|---|---|---|---|---|---|---|---|---|---|---|---|
| | C | Si | Mn | P | S | Cr | Ni | Al | N | V | B | Mo | Cu | | | | | |
| 1 | 0.008 | 0.15 | 1.5 | 0.012 | 0.003 | 12.0 | 0.54 | 0.005 | 0.007 | 0.08 | - | - | - | 11.59 | 253 | 295 | O | *INVENTIVE STEEL |
| 2 | 0.011 | 0.15 | 1.5 | 0.020 | 0.003 | 11.5 | 0.64 | 0.01 | 0.008 | 0.12 | - | - | - | 11.35 | 260 | 280 | O | |
| 3 | 0.008 | 0.18 | 1.6 | 0.023 | 0.002 | 11.2 | 0.26 | 0.02 | 0.009 | 0.30 | - | - | - | 13.20 | 289 | 265 | O | |
| 4* | 0.010 | 0.16 | 1.5 | 0.011 | 0.003 | 11.8 | 0.55 | 0.02 | 0.015 | 0.12 | 0.0008 | - | - | 11.64 | 250 | 305 | O | |
| 5* | 0.009 | 0.18 | 1.5 | 0.022 | 0.004 | 11.9 | 0.45 | 0.05 | 0.008 | 0.12 | 0.0015 | - | - | 11.98 | 265 | 315 | O | |
| 6 | 0.009 | 0.15 | 2.8 | 0.019 | 0.005 | 14.8 | 0.81 | 0.08 | 0.009 | 0.08 | - | - | 0.45 | 13.41 | 200 | 260 | O | |
| 7* | 0.004 | 0.27 | 1.5 | 0.033 | 0.003 | 10.8 | 0.35 | 0.005 | 0.009 | 0.06 | 0.0015 | 0.48 | 0.35 | 10.68 | 253 | 305 | O | |
| 8* | 0.015 | 0.08 | 2.0 | 0.011 | 0.018 | 12.3 | 0.95 | 0.005 | 0.015 | 0.12 | 0.0009 | 1.25 | 0.31 | 12.01 | 223 | 325 | O | |
| 9* | 0.011 | 0.08 | 2.0 | 0.012 | 0.005 | 14.8 | 0.88 | 0.02 | 0.015 | 0.05 | 0.0014 | 0.48 | 0.56 | 13.40 | 170 | 335 | O | |
| 10 | 0.002 | 0.15 | 2.5 | 0.024 | 0.005 | 12.3 | 0.67 | 0.04 | 0.002 | 0.12 | - | - | - | 12.13 | 200 | 250 | O | |
| 11 | 0.008 | 0.45 | 1.4 | 0.012 | 0.003 | 9.5 | 0.54 | 0.005 | 0.007 | 0.13 | - | 1.5 | 0.5 | 10.35 | 305 | 300 | O | |
| A | 0.011 | 0.18 | 1.5 | 0.031 | 0.006 | 10.9 | 0.31 | 0.02 | 0.018 | 0 | - | - | - | 9.75 | 230 | 320 | x | COMPARATIVE STEEL |
| B | 0.018 | 0.16 | 1.4 | 0.036 | 0.004 | 11.0 | 0.41 | 0.04 | 0.018 | 0.02 | - | - | - | 9.80 | 240 | 320 | Δ | |
| C | 0.004 | 0.15 | 2.2 | 0.028 | 0.003 | 11.1 | 0.99 | 0.03 | 0.009 | 0.38 | - | - | - | 13.30 | 58 | 180 | O | |
| D | 0.004 | 0.35 | 5.6 | 0.018 | 0.010 | 11.5 | 0.15 | 0.02 | 0.008 | 0.15 | - | - | - | 10.67 | 100 | 280 | O | |
| E | 0.007 | 0.16 | 1.5 | 0.032 | 0.008 | 14.5 | 0.12 | 0.03 | 0.005 | 0.15 | - | - | - | 15.25 | 68 | 200 | O | |

T: HAZ TOUGHNESS (J/cm²)  (ABSORBED ENERGY AT 0°C)

U: HAZ HARDNESS (Hv)

W: DEGREE OF RUSTING (HAZ CORROSION RESISTANCE)

## Claims

1. Cr-containing steel usable for a welded structure, the steel containing, by mass%, C: not more than 0.020%, Si: not more than 1.00%, Mn: 1.0 to 5.0%, P: not more than 0.050%, S: not more than 0.020%, Cr: 6.0 to 15.0%, Ni: 0.10 to 1.00%, Al: not more than 0.100%, N: not more than 0.020%, V: 0.03 to 0.30%, B: 0.0003 to 0.0050%, optionally Cu: 0.10 to 2.00%, optionally Mo: 0.40 to 3.00%, the balance consisting of Fe and unavoidable impurities, wherein an F value calculated by putting values of contents of the respective components in the following formula (1) is not larger than 13.50:

$$F\ value = Cr + 0.4 \times Si + 0.2 \times Al + 5 \times P - 0.4 \times Mn$$
$$- 0.7 \times Ni - 35 \times C - 10 \times N + 10 \times V \quad ...(1)$$

2. Cr-containing steel usable for a welded structure according to claim 1, wherein the steel further contains at least one of Cu: 0.10 to 2.00% and Mo: 0.40 to 3.00%, the balance consisting of Fe and unavoidable impurities, and an F' value calculated by putting values of contents of the respective components in the following formula (2) is not larger than 13.50:

$$F'\ value = Cr + 0.6 \times Mo + 0.4 \times Si + 0.2 \times Al + 5 \times P$$
$$- 0.4 \times Mn - 0.7 \times Ni - 0.6 \times Cu - 35 \times C$$
$$- 10 \times N + 10 \times V \quad ...(2)$$

3. Cr-containing steel usable for a welded structure according to any one of claims 1 or 2, wherein the Cr-containing steel is a hot-rolled plate.

4. Cr-containing steel usable for a welded structure according to any one of claims 1 or 2, wherein the Cr-containing steel is a cold-rolled plate subjected to cold rolling after hot rolling.

**Patentansprüche**

1. Cr-haltiger Stahl, der für eine geschweißte Struktur verwendbar ist, wobei der Stahl - in Masse-% - nicht mehr als 0,020 % C, nicht mehr als 1,00 % Si, 1,0 bis 5,0 % Mn, nicht mehr als 0,050 % P, nicht mehr als 0,020 % S, 6,0 bis 15,0 % Cr, 0,10 bis 1,00 % Ni, nicht mehr als 0,100 % Al, nicht mehr als 0,020 % N, 0,03 bis 0,30 % V, 0,0003 bis 0,0050 % B, optional 0,10 bis 2,00 % Cu, optional 0,40 bis 3,00 % Mo enthält, der Rest aus Fe und beiläufigen Verunreinigungen besteht, wobei der F-Wert, der durch Einsetzen der Gehaltswerte der jeweiligen Komponenten in die folgende Formel (1) berechnet wird, nicht größer als 13,50 ist:

$$\text{F-Wert} = \text{Cr} + 0,4 \times \text{Si} + 0,2 \times \text{Al} + 5 \times \text{P} - 0,4 \times \text{Mn} - 0,7 \times \text{Ni} - 35 \times \text{C} - 10 \times \text{N} + 10 \times \text{V} \qquad (1)$$

2. Cr-haltiger Stahl, der für eine geschweißte Struktur verwendbar ist, nach Anspruch 1, wobei der Stahl ferner mindestens einen Bestandteil von 0,10 bis 2,00 % Cu und 0,40 bis 3,00 % Mo enthält, der Rest aus Fe und beiläufigen Verunreinigungen besteht und der F'-Wert der durch Einsetzen der Gehaltswerte der jeweiligen Komponenten in die folgende Formel (2) berechnet wird, nicht größer als 13,50 ist:

$$\text{F'-Wert} = \text{Cr} + 0,6 \times \text{Mo} + 0,4 \times \text{Si} + 0,2 \times \text{Al} + 5 \times \text{P} - 0,4 \times \text{Mn} - 0,7 \times \text{Ni} - 0,6 \times \text{Cu} - 35 \times \text{C} - 10 \times \text{N} + 10 \times \text{V} \qquad (2)$$

3. Cr-haltiger Stahl, der für eine geschweißte Struktur verwendbar ist, nach einem der Ansprüche 1 oder 2, wobei der Cr-haltige Stahl eine warmgewalzte Platte ist.

4. Cr-haltiger Stahl, der für eine geschweißte Struktur verwendbar ist, nach einem der Ansprüche 1 oder 2, wobei der Cr-haltige Stahl eine kaltgewalzte Platte ist, die einem Kaltwalzen nach dem Warmwalzen unterzogen wurde.

**Revendications**

1. Acier contenant du Cr pouvant être utilisé pour une structure soudée, l'acier contenant, en % en masse, C : pas plus de 0,020 %, Si : pas plus de 1,00 %, Mn : 1,0 à 5,0 %, P : pas plus de 0,050 %, S : pas plus de 0,020 %, Cr : 6,0 à 15,0 %, Ni : 0,10 à 1,00 %, l'Al : pas plus de 0,100 %, N : pas plus de 0,020 %, V : 0,03 à 0,30 %, B : 0,0003 à 0,0050 %, éventuellement Cu : 0,10 à 2,00 %, éventuellement Mo : 0,40 à 3,00 %, le reste étant constitué de Fe et d'impuretés inévitables, dans lequel une valeur F calculée en mettant les valeurs des teneurs des composants respectifs dans la formule (1) suivante n'est pas supérieure à 13,50 :

$$\text{Valeur F} = \text{Cr} + 0,4 \times \text{Si} + 0,2 \times \text{Al} + 5 \times \text{P} - 0,4 \times \text{Mn} - 0,7 \times \text{Ni} - 35 \times \text{C} - 10 \times \text{N} + 10 \times \text{V} \quad \text{...}(1)$$

2. Acier contenant du Cr pouvant être utilisé pour une structure soudée selon la revendication 1, dans lequel l'acier contient en outre au moins un élément parmi Cu : 0,10 à 2,00 % et Mo : 0,40 à 3,00 %, le reste étant constitué de Fe et d'impuretés inévitables, et une valeur F' calculée en mettant les valeurs des teneurs des composants respectifs dans la formule (2) suivante n'est pas supérieure à 13,50 :

```
    Valeur F' = Cr + 0,6 x Mo + 0,4 x Si + 0,2 x Al +
5 x P - 0,4 x Mn - 0,7 x Ni – 0,6 x Cu – 35 x C - 10 x
N + 10 x V      ...(2)
```

3.  Acier contenant du Cr pouvant être utilisé pour une structure soudée selon l'une quelconque des revendications 1 ou 2, dans lequel l'acier contenant du Cr est une tôle laminée à chaud.

4.  Acier contenant du Cr pouvant être utilisé pour une structure soudée selon l'une quelconque des revendications 1 ou 2, dans lequel l'acier contenant du Cr est une tôle laminée à froid soumise à un laminage à froid après un laminage à chaud.

# FIG. 1

## FIG. 2

BASIC MATERIAL

WELD

HAZ

HAZ

4 mm

POINTS FOR MEASUREMENT OF HARDNEESS

# FIG. 3

WELDED BEAD
AT CENTER OF
PLATE THICKNESS

PLATE THICKNESS
REDUCED TO
2 mm BY CUTTING
AND GRINDING FRONT
AND REAR SIDES

TEST
PIECE

NOTCH

10 mm

CENTER OF
WELDED BEAD

POSITION SPACED
3 mm FROM BEAD
CENTER

TEST PIECE

2 mm

NOTCH

# FIG. 4